Europäisches Patentamt

European Patent Office

Office européen des brevets

(11) Publication number: **0 121 584**
**B1**

(12) **EUROPEAN PATENT SPECIFICATION**

(45) Date of publication of patent specification: **12.07.89**

(21) Application number: **83103412.9**

(22) Date of filing: **07.04.83**

(60) Divisional application 87114290 filed on 30.09.87.

(51) Int. Cl.⁴: **H 02 P 9/42,** H 02 K 17/42, H 02 K 19/26

(54) A rotating electric machine for use as generator.

(43) Date of publication of application:
**17.10.84 Bulletin 84/42**

(45) Publication of the grant of the patent:
**12.07.89 Bulletin 89/28**

(84) Designated Contracting States:
**AT BE CH DE FR GB IT LI LU NL SE**

(56) References cited:
EP-A-0 028 468
DE-A-1 638 340
GB-A-1 369 844
GB-A-2 054 975
US-A-3 445 697
US-A-4 246 531
US-A-4 305 001

(73) Proprietor: **ENERGIA ANDINA LTDA.**
**Calle 22C, No. 30-49**
**Bogota (CO)**

(72) Inventor: **Miller, Jorge**
**Calle 22C, No. 30-49**
**Bogotá (CO)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

The present invention relates to a rotating electric machine for use as a generator in accordance with the prior art portion of claim 1.

EP—A1—0 028 468 already discloses an alternating current generator having the features indicated in the prior art portion of claim 1. The prior art generator is excited by applying a rotary voltage to the windings of the second stator. The rotational speed of the rotary current induced in the windings of the second rotor equals the sum of the frequency of the exciting field and the rotational speed of the rotor. The windings of the second rotor are cross-connected to the windings of the first rotor. Consequently, the direction of rotational movement of the electric field generated by the first rotor is opposite to the direction of the rotary field at the second rotor when referred to the second rotor.

The present invention is based on the technical task of providing a rotating electric machine for use as a generator of the type mentioned hereinbefore which can be operated at a desired output frequency.

This task is solved by a rotating electric machine in accordance with the prior art portion of claim 1 having the characterising features thereof. Thus, the frequency of the rotary electric current induced in the first stator equals twice the rotational speed of the rotor minus the rotational speed of the exciting electric field.

By means of the controlled system indicated in claim 2, it is achieved that the amplitude of the rotary voltage induced in the windings of the first stator remains constant in a load-independent manner within the power range of the generator.

One embodiment of the rotating electric machine according to the invention will be described hereinafter on the basis of the drawing, in which:

Fig. 1 is a schematic representation of the winding arrangement and

Fig. 2 is a schematic representation of a speed-and-amplitude controlled rotary current generator provided with the winding arrangement shown in Fig. 1.

The special case (N=3) shown in the figures will be the most common form of application, since this is the conventional three-phase rotary current system. A first stator 1 has provided thereon three stator windings 2, 3, 4 disposed on a circle round an axis and offset by 120° with respect to one another. A rotor 5, which is adapted to be rotated about the axis, is disposed opposite the stator. Said rotor has provided thereon three rotor windings 6, 7, 8 which are disposed on a circle round the axis thereof and offset by 120° with respect to one another and which are used for exciting a magnetic field. A second rotor 9 is fixedly connected to said first rotor 5 and rotates at the speed of rotation of said first rotor 5 about the axis thereof. The connection between the two rotors 5, 9 can be effected by an axis by means of which the rotors 5, 9 are supported. The second rotor 9 has provided thereon three rotor windings 10, 11, 12 disposed on a circle round the axis and offset by 120° with respect to one another. The first rotor winding 6 of the first rotor 5 is connected to the first rotor winding 10 of the second rotor 9. The second rotor winding 7 of the first rotor 5 is connected to the third rotor winding 12 of the second rotor 9. The third rotor winding 8 of the first rotor 5 is connected to the second rotor winding 11 of the second rotor 9. A second stator 13 is disposed opposite the second rotor 9. Said second stator 13 has provided thereon three stator windings 14, 15, 16 disposed on a circle round the axis and offset by 120° with respect to one another.

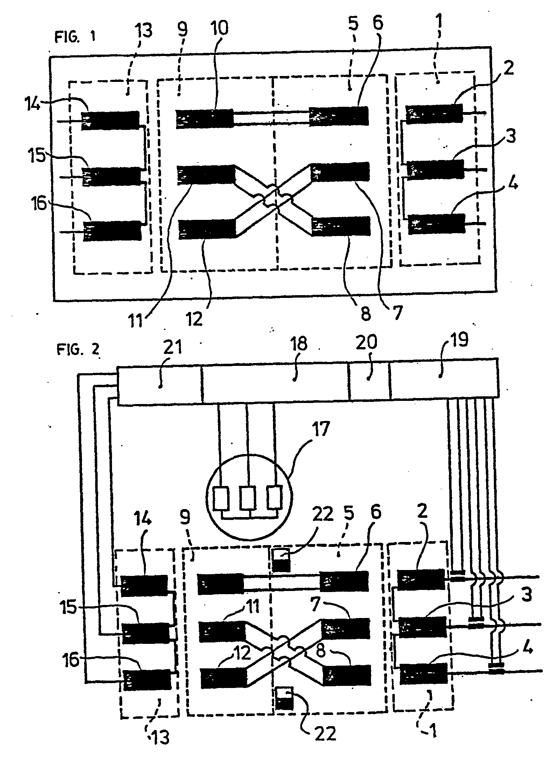

Fig. 2 shows the above described rotating electric machine for use as a generator. The speed of rotation of the rotors 5, 9 is determined by a measuring means 17. The measuring means consists of a circulating permanent magnet 22 and of a stationary induction coil. A control means 18 controls the frequency and phase of an exciting current generator 21. It is thus achieved that, when the speed of rotation and the rotary phase of the rotors 5, 9 deviate from their nominal speed of rotation and nominal phase, the speed of rotation and the rotary phase of an input rotary field, which is generated by an exciting rotary current flowing in the stator winding 14, 15, 16 of the second stator 13, is readjusted such that the frequency and phase position of the rotary voltage induced in the windings 2, 3, 4 of the first stator 1 maintains predetermined nominal values. In the case of low power levels the exciting current generator may be designed as a solid-state circuit. In the case of higher power levels the exciting current generator could consist of an additional generator, as shown in Fig. 2, which precedes this generator, said preceding generator being in turn fed by a solid-state exciting current generator. A second measuring means 19 taps via an inductive coupling the voltage amplitude of the rotary voltage induced in the windings 2, 3, 4 of the first stator 1. A second control means 20 controls the amplitude of the exciting current, which flows through the stator windings 14, 15, 16 of the second stator 13, such that the amplitude of the rotary voltage induced in the windings 2, 3, 4 of the first stator 1 remains constant in a load-independent manner within the power range of the generator. In the case of an increase in the load. i.e. when the amplitude of the rotary voltage applied to the windings 2, 3, 4 of the first stator 1 decreases, the measuring means 19 will measure the voltage drop and impart this information to the control means 20 which, in turn, will increase the amplitude of the exciting rotary current supplied to the windings 14, 15, 16 of the stator 13. It is a matter of course that not even such a controlled system will be capable of increasing the power range of a generator, but the only thing which can be achieved is a constant output voltage of the generator even in the case of varying loads, as long as the maximum load on the generator is not exceeded. The control means 20 for controlling the amplitude can also be designed as a solid-state circuit, as long as the exciting current required has only small or medium values. In view of the fact that in the case of high power requirements, a cascade connection of the generators is necessary not least for purposes of frequency control, it will also in this case be possible to design the respective first exciting generator as a solid-state circuit.

The invention is not limited to the three-phase rotary current system. The rotating electric machine according to the invention can be used in N-phase rotary current systems in an equally advantageous manner and it is also possible to supply only a single winding 14, 15, 16 of the second stator 13 with a direct current serving to excite the rotary current generator or the rotary current motor. In this case the other two windings of the second stator 13 will be superfluous. It is also possible to use the windings 14, 15, 16 simultaneously as a measuring means 17 for measuring the speed of rotation of the rotors 5, 9. When the rotor is driven by a synchronous motor, the electric machine according to the invention can also be used for transmitting power from a first rotary current mains supply having a first frequency to a second rotary current mains supply having a second frequency.

## Claims

1. A rotating electric machine for use as a generator (1) comprising a stator (1) and a rotor (5) disposed opposite said stator (1) and rotatable about an axis, and further comprising a number N of stator windings (2, 3, 4) disposed on said stator (1) on a circle round the axis at uniform distances from one another, wherein the rotor (5) has provided thereon a number N of rotor windings (6, 7, 8) disposed on a circle round the axis at uniform distances from one another and used for producing a magnetic field, said number N of rotor windings corresponding to said number N of stator windings, wherein a second rotor (9) is connected to the first rotor (5) and rotates at the speed of rotation of the first rotor (5) about the axis thereof, wherein said second rotor (9) has provided thereon a number N of rotor windings (10, 11, 12) disposed on a circle round the axis at uniform distances from one another, said number N of rotor windings corresponding to said number N of stator windings, the first rotor winding (6) of the first rotor (5) is connected to the first rotor winding (10) of the second rotor (9), wherein further rotor windings of the first and second rotor are cross-connected so that the rotary fields at the two rotors (5, 9) have opposite directions of rotation, wherein a second stator (13) is associated to the second rotor (9), and wherein said second stator (13) has provided thereon a number N of stator windings (14, 15, 16) disposed on a circle round the axis at uniform distances from one another, said number N of stator windings of said second stator corresponding to said number N of stator windings of said first stator, characterised in that as far as rotor windings (7, 8) other than the first rotor winding (6) are concerned, and when the rotor windings of each rotor are referred to by a series of reference numbers n=1, 2... N, the $n^{th}$ rotor winding (7, 8) of the first rotor (5) is connected to the $(N+2-n)^{th}$ rotor winding (12, 9) of the second rotor (9), and that the electric machine comprises a measuring means (17) for determining the speed of rotation of the rotors (5, 9) and a control means (18) for controlling an exciting current generator (21), said control means being used, when the speed of rotation and the rotary phase of the rotors (5, 9) deviate from their nominal speed of rotation and nominal phase, for readjusting the speed of rotation and the rotary phase of an input rotary field, which is generated by an exciting rotary current flowing in said stator windings (14, 15, 16) of said second stator (13) such that the frequency and phase position of the rotary voltage induced in the windings (2, 3, 4) of the first stator (1) maintains predetermined nominal values.

2. A rotating electric machine according to claim 1, characterised by a second measuring means (19) for measuring the voltage amplitude of the rotary voltage induced in the windings (2, 3, 4) of the first stator (1) and a second control means (20) for controlling the amplitude of the exciting rotary current, which flows through the stator windings (14, 15, 16) of the second stator (13), such that the amplitude of the rotary voltage induced in the windings (2, 3, 4) of the first stator (1) remains constant in a load-independent manner within the power range of the generator.

## Patentansprüche

1. Rotierende elektrische Maschine zur Verwendung als Generator (1), mit einem Stator (1) und einem Rotor (5), angeordnet gegenüberliegend zu dem Stator (1) und drehbar um eine Achse, und außerdem mit einer Anzahl N von Statorwicklungen (2, 3, 4), die auf dem Stator (1) auf einem Kreis rund um die Achse in gleichen Abständen voneinander angeordnet sind, wobei auf dem Rotor (5) eine Anzahl N von Rotorwicklungen (6, 7, 8), angeordnet auf einem Kreis rund um die Achse in gleichmäßigen Abständen voneinander, vorgesehen sind und diese verwendet werden, um ein Magnetfeld zu erzeugen, wobei die Anzahl N von Rotorwicklungen der Anzahl N von Satorwicklungen entspricht, wobei ein zweiter Rotor (9) mit dem ersten Rotor (5) verbunden ist und sich mit der Drehzahl des ersten Rotors (5) um dessen Achse dreht, wobei auf dem zweiten Rotor (9) eine Anzahl N von Rotorwicklungen (10, 11, 12) auf einem Kreis rund um die Achse mit gleichmäßigen Abständen voneinander angeordnet sind, die Anzahl N der Rotorwicklungen der Anzahl N der Statorwicklungen entspricht, die erste Rotorwicklung (6) des ersten Rotors (5) mit der ersten Rotorwicklung (10) des zweiten Rotors (9) verbunden ist, wobei außerdem die Rotorwicklungen des ersten und zweiten Rotors kreuzgeschaltet sind, so daß die Drehfelder an den beiden Rotoren (5, 9) entgegengesetzte Drehrichtungen aufweisen, wobei ein zweiter Stator (13) dem zweiten Rotor (9) zugeordnet ist und wobei auf dem zweiten Stator (13) eine Anzahl N von Statorwicklungen (14, 15, 16) auf einem Kreis rund um die Achse mit gleichmäßigen Abständen voneinander angeordnet sind, wobei die Anzahl N der Statorwicklungen des zweiten Stators der Anzahl N der Statorwicklungen des ersten Stators entspricht, dadurch gekennzeichnet, daß soweit andere Rotorwicklungen (7, 8) als die erste Rotorwicklung (6) betroffen sind und wenn die Rotorwicklungen jedes Rotors durch eine Reihe von Positionsziffern n=1, 2... N bezeichnet ist, die n-te Rotorwicklung (7, 8) des ersten Rotors (5) mit der (N+2−n)-ten Rotorwicklung (12, 9) des zweiten Rotors (9) verbunden ist, und daß die elektrische Maschine aufweist eine Meßeinrichtung (17), um die Drehzahl der Rotoren (5, 9) zu bestimmen und eine Steuereinrichtung (18) zum Steuern eines Anregungsstromgenerators (21), wobei die Steuereinrichtung verwendet wird, um dann, wenn die Drehzahl und die Drehphase der Rotoren (5, 9) von ihrer Nenndrehzahl und Nennphase abweichen, die Drehzahl und die Drehphase eines Eingangsdrehfeldes neu einzustellen, das durch einen Anregungsdrehstrom erzeugt wird, der in den Statorwicklungen (14, 15, 16) des zweiten Stators (13) fließt, derart, daß die Frequenz und Phasenlage der Drehspannung, die in den Wicklungen (2, 3, 4) des ersten Stators (1) induziert wird, vorgegebene Nennwerte beibehält.

2. Rotierende elektrische Maschine nach Anspruch 1, gekennzeichnet durch eine zweite Meßeinrichtung (19) zum Messen der Spannungsamplitude der Drehspannung, die in den Wicklungen (2, 3, 4) des ersten Stators (1) induziert wird, und eine zweite Steuereinrichtung (20) zum Steuern der Amplitude des Anregungsdrehstromes, der durch die Statorwicklungen (14, 15, 16) des zweiten Stators (13) fließt, derart, daß die Amplitude der Drehspannung, die in den wicklungen (2, 3, 4) des ersten Stators (1) induziert wird, in lastunabhängiger Weise innerhalb des Leistungsbereiches des Generators konstant bleibt.

**Revendications**

1. Machine électrique rotative pour usage en tant que génératrice (1) comprenant un stator (1) et un rotor (5) disposé à l'opposé de ce stator (1) et pouvant tourner autour d'un axe, et comprenant en outre un nombre N d'enroulements de stator (2, 3, 4) disposés sur ce stator (1) sur un cercle entourant l'axe à des distances uniformes les uns des autres, dans laquelle le rotor (5) est muni d'un nombre N d'enroulements de rotor (6, 7, 8) disposés sur un cercle entourant l'axe à des distances uniformes les uns des autres, et utilisés pour produire un champ magnétique, ce nombre N d'enroulements de rotor correspondant audit nombre N d'enroulements de stator, dans laquelle un second rotor (9) est connecté au premier rotor (5) et tourne à la vitesse de rotation du premier rotor (5) autour de l'axe de celui-ci, dans laquelle ce second rotor (9) est muni d'un nombre N d'enroulements de rotor (10, 11, 12) disposés sur un cercle entourant l'axe à des distances uniformes les uns des autres, ce nombre N d'enroulements de rotor correspondant audit nombre N d'enroulements de stator, le premier enroulement de rotor (6) du premier rotor (5) est connecté au premier enroulement de rotor (10) du second rotor (9), dans laquelle des enroulements de rotor supplémentaires des premier et second rotors sont connectés transversalement de façon que les champs rotatifs produits sur les deux rotors (5, 9) aient des directions de rotation opposées, dans laquelle un second stator (13) est associé au second rotor (9) et dans laquelle ce second stator (13) est muni d'un nombre N d'enroulements de stator (14, 15, 16) disposés sur un cercle entourant l'axe à des distances régulières les uns des autres, ce nombre N d'enroulements de stator de ce second stator correspondant audit premier stator, caractérisée en ce que: en ce qui concerne les enroulements de rotor (7, 8) autres que le premier enroulement de rotor (6), et lorsque les enroulements de rotor de chaque rotor sont désignés par une série de références numériques n=1, 2... N, le $n^{\text{ième}}$ enroulement de rotor (7, 8) du premier rotor (5) est connecté au $(N+2-n)^{\text{ième}}$ enroulement de rotor (12, 9) du second rotor (9), et en ce que la machine électrique comprend un moyen de mesure (17) pour déterminer la vitesse de rotation des rotors (5, 9) et un moyen de commande (18) pour commander une génératrice de courant d'excitation (21), ce moyen de commande étant utilisé, lorsque la vitesse de rotation et la phase rotative des rotors (5, 9) s'écartent de leurs vitesse nominale de rotation et phase nominale, pour réajuster la vitesse de rotation et la phase rotative d'un champ rotatif d'entrée, qui est engendré par un courant rotatif d'excitation circulent dans lesdits enroulements de stator (14, 15, 16) dudit second stator (13), tel que les fréquence et position de phase de la tension rotative induite dans les enroulements (2, 3, 4) du premier stator (1) conservent des valeurs nominales prédéterminées.

2. Machine électrique rotative selon la revendication 1, caractérisée par un second moyen de mesure (19) pour mesurer l'amplitude de tension de la tension rotative induite dans les enroulements (2, 3, 4) du premier stator (1) et un second moyen de commande (20) pour commander l'amplitude du courant rotatif d'excitation, qui circule dans les enroulements de stator (14, 15, 16) du second stator (13), de façon que l'amplitude de la tension rotative induite dans les enroulements (2, 3, 4) du premier stator (1) reste constante indépendamment de la charge, dans la gamme de puissance de la génératrice.

EP 0 121 584 B1

FIG. 1

FIG. 2

1